# FASCICULE DE BREVET EUROPEEN

(11) **EP 3 697 825 B1**
(45) Date de publication et mention de la délivrance du brevet: **31.07.2024**
(21) Numéro de dépôt: 18796721.1
(22) Date de dépôt: 11.10.2018
(51) Int. Cl.: C08F 295/00, C08F 297/06

(54) **POLYMERES BLOCS DIENIQUES ET ETHYLENIQUES AVEC DES UNITES CYCLIQUES HYDROCARBONEES ET SATUREES**
DIEN- UND ETHYLENISCHE BLOCKPOLYMERE MIT GESÄTTIGTEN CYCLISCHEN KOHLENWASSERSTOFFEINHEITEN
DIENE AND ETHYLENIC BLOCK POLYMERS WITH SATURATED, HYDROCARBON CYCLIC UNITS

(30) Priorité: 19.10.2017 FR 1759836
(43) Date de publication de la demande: 26.08.2020
(73) Titulaire: Compagnie Générale des Etablissements Michelin, 63000 Clermont-Ferrand (FR)
(72) Inventeur: JEAN-BAPTISTE-DIT-DOMINIQUE, François, 63040 Clermont-Ferrand Cedex 9 (FR); LAFAQUIERE, Vincent, 63040 Clermont-Ferrand Cedex 9 (FR)
(74) Mandataire: M.F.P. Michelin
(86) Numéro de dépôt international: PCT/FR2018/052524
(87) Numéro de publication internationale: WO 2019/077234

(56) Documents cités:
- EP-A1- 1 092 731
- EP-A1- 2 599 804
- EP-A1- 2 599 808
- EP-A1- 2 671 897
- THUILLIEZ J ET AL: "ansa-Bis(fluorenyl)neodymium Catalysts for Cyclopolymerization of Ethylne with Butadiene", MACROMOLECULES, AMERICAN CHEMICAL SOCIETY, US, vol. 42, no. 11, 9 June 2009 (2009-06-09), pages 3774 - 3779, XP001523727, ISSN: 0024-9297, DOI: 10.1021/MA9003852

## Description

La présente invention concerne le domaine des polymères blocs résultant de la polymérisation de mélange monomère comprenant un 1,3-diène et de l'éthylène et dont l'un des blocs comprend des unités cycliques hydrocarbonées et saturées.

Il est toujours d'intérêt de développer de nouveaux polymères blocs qui présentent une microstructure originale en vue de toujours proposer des matériaux différents. Or, il n'est pas connu de polymères blocs résultant de la polymérisation de mélange monomère comprenant un 1,3-diène et de l'éthylène et dont l'un des blocs comprend des unités cycliques hydrocarbonées et saturées.

En utilisant un procédé particulier, la Demanderesse a découvert la synthèse d'un nouveau polymère bloc. Ce polymère a une composition particulière, puisqu'un des blocs a une microstructure accessible par polymérisation anionique et un des autres blocs a une microstructure accessible par polymérisation réalisée en présence d'un métallocène.

Ainsi, l'invention concerne un polymère comprenant un premier bloc et un deuxième bloc, le polymère bloc comprenant des unités éthylène, des unités UD de structure cyclique de formule (I) et des unités de structure 1-4 butadiène ou de structure 1-2 butadiène, à condition que si le premier polymère bloc est une chaîne homopolymère d'un 1,3-diène, le polymère bloc présente au moins une Tg inférieure à -50°C, de préférence comprise entre -100°C et -50°C,
dans lequel,
le premier bloc comprend plus de 0 à 100% en moles d'unités monomères d'un premier 1,3-diène et de 0 à moins de 100% en moles d'unités monomères d'une α-monoléfine aromatique de formule CH₂=CH-Ar, Ar représentant un groupe aromatique, substitué ou non, préférentiellement phényle ou aryle
le premier bloc est une chaîne homopolymère du premier 1,3-diène ou une chaîne copolymère du premier 1,3-diène et de l'α-monoléfine aromatique,
les unités éthylène, les unités de structure 1-4-butadiène ou 1-2 butadiène et les unités UD sont contenues dans le deuxième bloc.

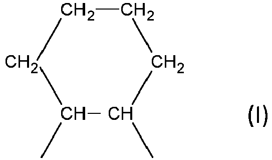

### I. DESCRIPTION DETAILLEE DE L'INVENTION

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les monomères.

Le polymère bloc conforme à l'invention a pour caractéristique essentielle d'être formé d'un premier bloc et d'un deuxième bloc. Le polymère bloc est avantageusement un polymère dibloc.

Selon l'invention, le premier bloc comprend plus de 0 à 100% en moles d'unités monomères d'un premier 1,3-diène et de 0 à moins de 100% en moles d'unités monomères d'une α-monoléfine aromatique. Le premier 1,3-diène est préférentiellement le 1,3-butadiène, l'isoprène ou leur mélange. L'α-monooléfine aromatique est une α-monoléfine de formule CH₂=CH-Ar, Ar représentant un groupe aromatique, substitué ou non. De préférence, le groupe aromatique est un groupe phényle ou un groupe aryle. L'α-monooléfine aromatique est plus préférentiellement le styrène ou un styrène substitué par un ou plusieurs groupes alkyles, encore plus préférentiellement le styrène.

Le premier bloc est un homopolymère d'un premier 1,3-diène ou un copolymère d'un premier 1,3-diène et d'une α-monoléfine aromatique. Lorsque le premier bloc est une chaîne homopolymère d'un 1,3-diène, le polymère bloc présente au moins une Tg inférieure à -50°C, de préférence comprise entre -100°C et -50°C De préférence, le premier bloc du polymère bloc conforme à l'invention est une chaîne atactique.

Le premier bloc contient préférentiellement plus de 100 unités monomères.

Selon l'invention, les unités éthylène, les unités de structure 1-4-butadiène ou 1-2 butadiène et les unités UD sont contenues dans le deuxième bloc. Les unités éthylène, les unités de structure 1-4-butadiène ou 1-2 butadiène contenues dans le polymère bloc sont des unités monomères bien connues et répondent de façon connue aux structures respectives -(CH₂-CH₂)-, -(CH₂-CH=CH-CH₂)- et -(CH₂-C(CH=CH₂)-. Les unités cycliques UD peuvent être obtenues par polymérisation d'un deuxième monomère qui est un mélange monomère contenant du 1,3-butadiène et de l'éthylène. Les unités UD sont formées en plus des unités de structure 1-4-butadiène ou 1-2 butadiène conventionnellement obtenues. Les unités UD résultent d'une insertion très particulière des monomères éthylène et 1,3-butadiène dans la chaîne polymère. Le mécanisme d'obtention d'une telle microstructure est par exemple décrit dans le document Macromolecules 2009, 42, 3774-3779.

De préférence, le deuxième bloc est une chaîne copolymère de 1,3-butadiène et d'éthylène.

Dans le polymère bloc conforme à l'invention, le premier bloc et le deuxième bloc sont liés de préférence directement l'un à l'autre. Autrement dit, le premier bloc est lié préférentiellement de façon covalente au deuxième bloc par un rattachement direct d'un atome de carbone d'une unité monomère du premier bloc à un atome de carbone d'une unité monomère du deuxième bloc.

Les polymères blocs conformes à l'invention peuvent être préparés par un procédé qui confère la microstructure originale du polymère bloc, notamment la présence de structures cycliques hydrocarbonées et saturées à 6 membres dans le polymère bloc et la spécificité de rattachement direct des deux blocs.

Le procédé de préparation du polymère bloc comprend une étape a) et une étape b), l'étape a) étant la réaction d'un métallocène de terre rare et d'un polymère anionique vivant du premier monomère, l'étape b) étant la polymérisation du deuxième monomère en présence du produit de réaction de l'étape a). Le premier monomère est le premier 1,3-diène telle que défini précédemment ou un mélange monomère contenant le premier 1,3-diène et l'α-monoléfine aromatique telle que définie précédemment. Le deuxième monomère est un mélange monomère contenant le 1,3-butadiène et l'éthylène. Le procédé consiste donc à former le deuxième bloc du polymère bloc par polymérisation subséquente après avoir préparé au préalable un polymère anionique vivant. Au terme du procédé, le polymère anionique vivant fait partie intégrante du polymère bloc sous la forme du premier bloc du polymère bloc. Pour la mise en oeuvre du procédé, le polymère anionique vivant est utile aux besoins de l'invention en tant qu'agent d'alkylation du métallocène pour activer le métallocène vis-à-vis de la polymérisation du deuxième monomère. L'étape a) est une réaction d'alkylation du métallocène par le polymère anionique vivant. De préférence, le rapport entre le nombre de moles de polymère vivant et le nombre de mole d'atomes de terre rare dans le métallocène varie dans un domaine allant de 0.8 à 1.2.

L'agent d'alkylation étant le polymère anionique vivant, l'ajout d'un agent d'alkylation d'une autre nature tel qu'un composé ayant une liaison carbone-métal, notamment C-AI ou C-Mg, est inutile dans le procédé. En effet, l'ajout d'un tel composé comme par exemple un trialkylaluminium ou un dialkylmagnésium aurait pour conséquence de diminuer le rendement en polymère bloc et de favoriser la présence d'homopolymère. Le milieu de polymérisation du deuxième monomère est dépourvu préférentiellement de composé ayant une liaison C-Al ou C-Mg.

Le polymère anionique vivant est donc obtenu de façon conventionnelle par polymérisation anionique du premier monomère dans un solvant, dit solvant de polymérisation. Le solvant de polymérisation peut être tout solvant hydrocarboné connu pour être utilisé dans la polymérisation de monomères 1,3-diènes et α-monoléfines aromatiques. De préférence, le solvant de polymérisation est le cyclohexane, le méthylcyclohexane ou le toluène.

Le solvant de polymérisation du premier monomère peut comprendre un additif pour contrôler la microstructure de la chaîne polymère et la vitesse de la réaction de polymérisation. Cet additif peut être un agent polaire tel qu'un éther ou une amine tertiaire, de préférence une amine tertiaire, de manière plus préférentielle une amine tertiaire dite chélalante comme la N,N,N',N'-tétraméthyléthylènediamine. L'additif est le plus souvent utilisé en faible quantité, notamment pour limiter les réactions de désactivation des sites propageants de la polymérisation anionique. La quantité d'additif dans le solvant de polymérisation, traditionnellement indexée sur le nombre de liaison carbone-métal dans le milieu de polymérisation, est réglée selon la microstructure souhaitée de la chaîne polymère et dépend donc du pouvoir complexant de l'additif. L'additif, notamment la N,N,N',N'-tétraméthyléthylènediamine, est préférentiellement utilisé à un taux d'au plus 1 équivalent de liaison carbone-métal, plus préférentiellement à un taux de 0.01 à 0.5 équivalent de liaison carbone-métal.

Le ratio entre la quantité de solvant et la quantité de premier monomère utile à la formation du polymère vivant est choisi par l'homme du métier selon la viscosité souhaitée de la solution polymère vivant. Cette viscosité dépend non seulement de la concentration de la solution polymère, mais aussi de nombreux autres facteurs comme la longueur des chaînes polymères, la nature du contre-ion du polymère vivant, les interactions intermoléculaires entre les chaînes polymères vivantes, le pouvoir complexant du solvant, la température de la solution polymère. Par conséquent, l'homme du métier ajuste la quantité de solvant au cas par cas.

Dans la réaction d'amorçage de la réaction de polymérisation est utilisé un composé connu comme amorceur de la polymérisation anionique des monomères utiles aux besoins de l'invention. De préférence, l'amorceur est un composé qui présente une liaison carbone-métal. L'amorceur est utilisé à un taux choisi en fonction de la longueur de chaîne souhaitée du polymère vivant et peut donc varier dans une large mesure.

De préférence, le polymère vivant est préparé par polymérisation du premier monomère amorcée par un amorceur qui est un composé lithié. A titre d'amorceur lithié, on peut citer les organolithiens, comme les n-butyllithium, le sec-butyllithium et le tert-butyllithium communément utilisés dans la polymérisation anionique des monomères utiles aux besoins de l'invention.

La température de polymérisation pour former le polymère vivant peut varier dans une large mesure. Elle est choisie en fonction notamment de la stabilité de la liaison carbone-métal dans le solvant de polymérisation, des coefficients de vitesse relatifs de la réaction d'amorçage et de la réaction de propagation, de la microstructure visée du polymère vivant. Traditionnellement, elle varie dans un domaine allant de -20 à 100°C, préférentiellement de 20 à 70°C.

Le métallocène utile aux besoins de l'invention dans l'étape a) est un métallocène de terre rare. On rappelle que les terres rares sont des métaux et désignent les éléments scandium, yttrium et les lanthanides dont le numéro atomique varie de 57 à 71. La terre rare est préférentiellement un lanthanide, plus préférentiellement le néodyme (Nd).

De préférence, le métallocène de terre rare comporte le motif de formule (la) ou (Ib)

P(Cp¹)(Cp²)Met (la)

(Cp¹)(Cp²)Met (Ib)

Met désignant un atome de métal de terre rare,
Cp¹ et Cp², identiques ou différents, étant choisis dans le groupe constitué par les groupes cyclopentadiényles, les groupes indényles et les groupes fluorényles, les groupes pouvant être substitués ou non,
P étant un groupe pontant les deux groupes Cp¹ et Cp², et comprenant au moins un atome de silicium ou de carbone.

A titre de groupes cyclopentadiényles, fluorényles et indényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les cyclopentadiènes, les fluorènes et indènes substitués, parce que ces derniers sont disponibles commercialement ou facilement synthétisables.

Dans la présente demande, dans le cas du groupe cyclopentadiényle, la position 2 (ou 5) désigne la position de l'atome de carbone qui est adjacent à l'atome de carbone auquel est attaché le pont P, qu'il soit P¹ ou P², comme cela est représenté dans le schéma ci-après.

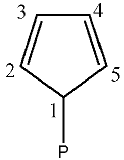

A titre de groupe cyclopentadiényle substitué en position 2 & 5, on peut citer plus particulièrement le groupe tétraméthylcyclopentadiényle.

Dans le cas du groupe indényle, la position 2 désigne la position de l'atome de carbone qui est adjacent à l'atome de carbone auquel est attaché le pont P, qu'il soit P¹ ou P², comme cela est représenté dans le schéma ci-après.

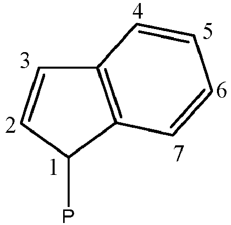

A titre de groupes indényles substitués en position 2, on peut citer plus particulièrement le 2-méthylindényle, le 2-phénylindényle.

A titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

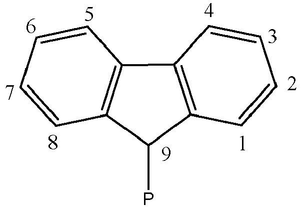

De préférence, Cp¹ et Cp², identiques ou différents, représentent chacun un groupe cyclopentadiényle non substitué, un groupe cyclopentadiényle substitué, un groupe fluorényle non substitué ou un groupe fluorényle substitué. Avantageusement, Cp¹ représente un groupe cyclopentadiényle substitué ou non susbstitué et Cp² représente un groupe fluorényle substitué ou non substitué, de préférence Cp¹ représente un groupe cyclopentadiényle non substitué et Cp² représente un groupe fluorényle non substitué.

Dans la formule (I-a), l'atome Met est relié à une molécule de ligand constitué des deux groupes Cp¹ et Cp² reliés entre eux par le pont P¹. De préférence, le symbole P¹, désigné sous le terme de pont, répond à la formule MR³R⁴, M représentant un atome de silicium ou de carbone, de préférence un atome de silicium, R³ et R⁴, identiques ou différents, représentant un groupe alkyle comprenant de 1 à 20 atomes de carbone. De manière plus préférentielle, le pont P¹ est de formule SiR³R⁴, R³ et R⁴, étant tels que définis précédemment. De manière encore plus préférentielle, P¹ répond à la formule SiMe₂.

Le métallocène peut être de formule (II-a) ou (II-b), de préférence de formule (Ila),

{P(Cₚ¹)(Cp²)Met-G}_{b} (II-a)

(Cpl)(Cp²)MetG (II-b)

dans lesquelles
- Met représente un atome de métal de terre rare,
- le symbole G désignant un atome d'halogène choisi dans le groupe constitué par le chlore, le fluor, le brome et l'iode, ou un groupe comprenant le motif borohydrure (BH₄),
- Cp¹, Cp² et P étant tels que définis précédemment, y compris selon les variantes préférentielles,
- b étant égal à 1 ou 2.

Lorsque G désigne un atome d'halogène, G est préférentiellement un atome de chlore.

Avantageusement, dans la formule (II-a) ou (II-b), Cp¹ représente un groupe cyclopentadiényle substitué ou non susbstitué et Cp² représente un groupe fluorényle substitué ou non substitué, de préférence Cp¹ représente un groupe cyclopentadiényle non substitué et Cp² représente un groupe fluorényle non substitué.

Que le métallocène soit de formule (I-a), (I-b), (II-a) ou (II-b), le symbole Met représente de préférence un atome de lanthanide (Ln) dont le numéro atomique va de 57 à 71, de manière plus préférentielle un atome de néodyme (Nd).

Le métallocène est de préférence un métallocène borohydrure de lanthanide ou un métallocène halogénure de lanthanide, notamment un métallocène chlorure de lanthanide. Comme métallocène utile à l'invention, on peut citer les métallocènes de formule (III), (IV), (V), (VI) ou (VII).

[Me₂Si(C₁₃H₈)₂NdCl] (III)

[Me₂Si(C₁₃H₈)₂Nd(BH₄)₂Li(THF)] (IV)

[Me₂Si(C₁₃H₈)₂Nd(BH₄)(THF)] (V)

[{Me₂Si(C₁₃H₈)₂Nd(BH₄)₂Li(THF)}₂] (VI)

[Me₂Si(C₁₃H₈)₂Nd(BH₄)] (VII)

Le métallocène peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans les demandes WO 2007054224. Le métallocène peut être préparé de façon traditionnelle par un procédé analogue à celui décrit dans les documents EP 1 092 731 et WO 2007054224, notamment par réaction dans des conditions inertes et anhydres du sel d'un métal alcalin du ligand avec un sel de terre rare comme un halogénure ou un borohydrure de terre rare, ou un sel d'un métal du groupe 4 dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Typiquement, le procédé est mis en oeuvre par l'ajout du métallocène au milieu de polymérisation du premier monomère contenant le polymère anionique vivant. Comme les liaisons carbone-métal présentent dans le milieu de polymérisation du premier monomère sont plutôt sujet à la désactivation en l'absence de monomère à polymériser, l'ajout du métallocène est de préférence effectué au plus tôt après la synthèse du polymère anionique vivant. Comme cela est connu de l'homme du métier, les réactions ainsi que la manipulation des monomères, du métallocène, du polymère anionique vivant, du solvant de polymérisation se font dans des conditions anhydres et sous atmosphère inerte.

La mise en contact du métallocène avec le polymère anionique vivant se fait préférentiellement à une température proche de la température ambiante (23°C), par exemple à température ambiante. Cette mise en contact cause l'activation du métallocène par le polymère anionique vivant. En d'autre terme, le métallocène est rendu actif vis-à-vis de la polymérisation par sa mise en contact avec le polymère anionique vivant. L'introduction du deuxième monomère dans la solution contenant le métallocène activé déclenche la polymérisation subséquente du deuxième monomère. La polymérisation est conduite conformément aux documents WO 2007054224.

Une fois le taux de conversion souhaité atteint de la réaction de polymérisation du deuxième monomère, la réaction de polymérisation est stoppée par un agent de terminaison, comme par exemple un composé ayant un proton acide, tel qu'un alcool. Le polymère bloc peut être récupéré, notamment en le séparant du milieu réactionnel, par exemple en le coagulant dans un solvant provoquant sa coagulation ou en éliminant le solvant de polymérisation et tout monomère résiduel sous pression réduite ou sous l'effet d'un entraînement à la vapeur (opération de stripping).

Le procédé permet de synthétiser les polymères blocs conformes à l'invention avec un haut rendement, typiquement d'au moins 90%, et évite ainsi les étapes de séparation et de purification du polymère bloc. Les hauts rendements en polymères blocs concernent aussi la synthèse de polymères blocs dont chacun des blocs a une masse molaire moyenne en nombre supérieures à 5000 g/mol.

Le procédé conduit donc à des polymères blocs originaux. Comme le premier bloc et le deuxième bloc sont synthétisés par des systèmes de polymérisation différents, le procédé permet de combiner des microstructures accessibles par polymérisation anionique et des microstructures accessibles par polymérisation catalysée en présence d'un métallocène. En particulier, une large gamme de température de transition vitreuse peut être atteinte pour le premier bloc tandis qu'une palette de cristallinité du deuxième bloc est aussi possible. Par ailleurs, la proportion relative des blocs dans le polymère bloc peut varier dans une large mesure. Le premier bloc peut par exemple représenter de 0.1 à 99.9% en masse du polymère bloc.

Si le polymère bloc est avantageusement un polymère dibloc, le polymère bloc conforme à l'invention n'est pas limité à un polymère dibloc et peut comprendre d'autres blocs. En effet, dans le procédé de préparation décrit, l'agent d'alkylation peut résulter lui-même de la polymérisation subséquente de charges monomères différentes et dans ce cas il comporte lui-même plusieurs blocs. Par ailleurs, le procédé permet également l'ajout de charges monomères différentes dans l'étape b) qui peut induire alors la formation de bloc de composition différente du deuxième bloc à la suite du deuxième bloc.

L'invention et ses avantages seront aisément compris à la lumière de la description et des exemples de réalisation qui suivent, donnés à titre illustratif et non limitatif.

### II. EXEMPLES DE REALISATION DE L'INVENTION

### 1) Détermination de la température de transition vitreuse des polymères :

La température de transition vitreuse est mesurée au moyen d'un calorimètre différentiel ("Differential Scanning Calorimeter") selon la norme ASTM D3418 (1999).

### 2) Détermination de la température de fusion des polymères :

La température de fusion est mesurée au moyen d'un calorimètre différentiel ("Differential Scanning Calorimeter") selon le mode opératoire suivant : sous atmosphère d'hélium, première montée en température de l'ambiante à 100°C, trempe jusqu'à -150°C, deuxième montée en température de -150C à 200°C selon une rampe de 20°C/min.

Echantillon porté de 25 à -150°C
- Isotherme à -150°C pendant 5 minutes
- chauffage de -150 à +200°C ; à 20°C/min
- Isotherme à +200°C pendant 5 minutes
- Refroidissement de +200 à -150°C ; à 20°C/min
- Isotherme à -150°C pendant 5 minutes
- Chauffage de -150 à +200°C, à 20°C/min

### 3) Préparation des polymères :

Le toluène et le 1,3-butadiène ont été épurés sur garde d'alumine. Le butyllithium provient de chez Aldrich (1,4 mol.L⁻¹) dans l'hexane et a été utilisé sans purification supplémentaire. Les métallocènes [Me₂SiFlu₂Nd(BH₄)₂Li(THF)]₂ et [Me₂SiCpFLuNd(BH₄)₂Li(THF)]₂ ont été préparés selon le protocole décrit dans la demande de brevet FR2893028 et FR 2893029.

Les polymères blocs sont préparés selon le mode opératoire décrit ci-après. Les conditions opératoires propres à chaque synthèse figurent dans les tableaux 1 et 2.

A une solution d'un premier monomère (M1) dans le toluène (100 mL) préparé dans une bouteille Steinie inertée à l'azote est additionnée une solution de butyllithium à 0,19 mol/L dans le toluène (0,5 ml). Le milieu réactionnel est ensuite agité à 60°C pendant 1h30 sauf indication contraire. Après ce temps écoulé, temps pendant lequel a lieu la polymérisation de M1, la solution de polymère anionique vivant obtenue est ensuite transvasée à l'aide d'une canule dans une bouteille Steinie inertée à l'argon et contenant le métallocène 1. Le mélange réactionnel est agité pendant 5 minutes à température ambiante jusqu'à ce que l'ensemble du métallocène soit alkylé et passe en solution. Le deuxième monomère (M2) est ensuite introduit selon une quantité de 1 g dans le milieu réactionnel. Le milieu réactionnel est agité pendant 2h à 60°C. Au terme de la réaction, le milieu réactionnel est dépressurisé et 1mL d'éthanol est ajouté pour stopper la réaction de polymérisation. 0,2 ml d'une solution de Santoflex 13 dans le toluène (100g/L) sont ajoutés et la solution de polymère est placée sous vide partiel et balayage d'azote pendant 24h à 60°C.

Le métallocène 1 est [Me₂SiFlu₂Nd(BH₄)₂Li(THF)]₂ .

Le deuxième monomère (M2) est un mélange (E/B) de 80% en mole d'éthylène et 20% en mole de 1,3-butadiène.

Deux séries d'essais, série 1 à 2, sont conduits selon le monomère M1 utilisé pour la synthèse du premier bloc et selon la microstructure du premier bloc. Les conditions de synthèse du premier bloc figurent dans le tableau 1 pour chacune des séries. Le tableau 1 indique également la température de transition vitreuse (« Tg polymère 1^{er} bloc ») d'un polymère obtenu dans les mêmes conditions opératoires que la synthèse du premier bloc du polymère bloc pour chaque série.

Les conditions de synthèse du deuxième bloc figurent dans le tableau 2.

Dans une même série d'essais, les conditions de synthèse du deuxième bloc diffèrent d'un essai à l'autre et sont indiquées dans le tableau 2. Chaque essai est numéroté avec une référence faite à la série à laquelle il appartient. Par exemple, l'essai 1-1 est l'essai n°1 de la série 1, ce qui signifie que les conditions de synthèse du premier bloc sont celles de la série 1 indiquées dans le tableau 1 et que les conditions de synthèse du deuxième bloc qui sont propres à cet essai n°1 de la série 1 sont décrites dans le tableau 2.

Pour l'essai 1-1, le temps d'agitation à 60°C pendant lequel a lieu la polymérisation de M1 est de 1h10 au lieu de 1h30.

Les caractéristiques des polymères blocs résultant des essais figurent aussi dans le tableau 2.

Dans le tableau 2, l'écriture (X1)-(X2) équivaut à la dénomination poly(X1-b-X2) : (X1) et (X2) désignant des polymères blocs résultant de la polymérisation respective d'un monomère X1 et d'un monomère X2, alors que l'écriture (X1X2) désigne un copolymère statistique de X1 et de X2. B est utilisé pour le monomère 1,3-butadiène, I pour isoprène, E pour éthylène.

Pour illustrer cette convention d'écriture, suivent ci-après quelques exemples :
(B)-(EB) est utilisé pour désigner un polymère bloc dont le premier bloc est un polybutadiène (B) et le deuxième bloc est un copolymère statistique de 1,3-butadiène et d'éthylène (EB).
(B)-(EB)-(E) désigne un polymère bloc dont le premier bloc est un polybutadiène (B), le deuxième bloc est formé de deux blocs, l'un est un copolymère statistique de 1,3-butadiène et d'éthylène (EB) et l'autre un polyéthylène (E).

Les polymères blocs des essais allient un premier bloc avec une microstructure accessible par la polymérisation anionique et un deuxième bloc avec une microstructure accessible par la polymérisation catalysée en présence d'un métallocène de terre rare. Les polymères bloc ont une microstructure d'autant plus originale qu'ils contiennent des unités cycliques à 6 membres, hydrocarbonées et saturées, en l'espèce 1,2-cyclohexanediyle, résultant d'une insertion particulière des monomères éthylène et 1,3-butadiène dans la chaîne polymère, en plus des unités conventionnelles d'éthylène et de 1,3-butadiène, respectivement -(CH₂-CH₂)-, (CH₂-CH=CH-CH₂)- et (CH₂-CH(C=CH₂))-. Ces unités cycliques sont obtenues grâce au choix combiné du métallocène et du mélange monomère contenant du 1,3-butadiène et de l'éthylène.

**Tableau 1**

| | Série 1 | Série 2 |
|---|---|---|
| M1 | 1,3-butadiène 1,4 mL | Isoprène 1.5 mL |
| BuLi | 0.50 mL (95 µmol) | 0.50 mL (95 µmol) |
| « Tg polymère 1^{er} bloc » | -94°C | -62°C |

**Tableau 2**

| | Métallocène (90 µmol) | M2 | Polymère bloc | % 1^{er} bloc | Tg 1^{er} bloc | Tg 2^{ème} bloc | Tf 2^{ème} bloc |
|---|---|---|---|---|---|---|---|
| 1-1 | 1 | E/B | (B)-(EB)-(E) | 39 | -92°C | -37°C | 121°C |
| 1-2 | 1 | E/B | (B)-(EB) | 50 | -92°C | -37°C | Phénomène endothermique étalé de -35°C à -20°C |
| 2-1 | 1 | E/B | (I)-(EB) | 49 | -62°C | -44°C | Phénomène endothermique étalé de -35°C à -20°C - |

## Revendications

1. Polymère bloc comprenant un premier bloc et un deuxième bloc, lequel polymère bloc comprend des unités éthylène, des unités UD de structure cyclique de formule (I) et des unités de structure 1-4-butadiène ou de structure 1-2 butadiène,
à condition que si le premier polymère bloc est une chaîne homopolymère d'un 1,3-diène, le polymère bloc présente au moins une Tg inférieure à -50°C, de préférence comprise entre -100°C et -50°C,
dans lequel,
le premier bloc comprend plus de 0 à 100% en moles d'unités monomères d'un premier 1,3-diène et de 0 à moins de 100% en moles d'unités monomères d'une α-monoléfine aromatique de formule CH₂=CH-Ar, Ar représentant un groupe aromatique, substitué ou non, préférentiellement phényle ou aryle
le premier bloc est une chaîne homopolymère du premier 1,3-diène ou une chaîne copolymère du premier 1,3-diène et de l'α-monoléfine aromatique,
les unités éthylène, les unités de structure 1-4-butadiène ou 1-2 butadiène et les unités UD sont contenues dans le deuxième bloc.

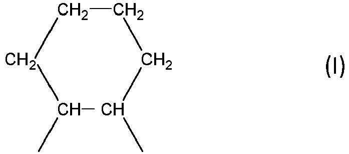

2. Polymère bloc selon la revendication 1, lequel polymère bloc est un dibloc.

3. Polymère bloc selon l'une quelconque des revendications 1 à 2 dans lequel le premier 1,3-diène est le 1,3-butadiène, l'isoprène ou leur mélange.

4. Polymère bloc selon l'une quelconque des revendications 1 à 3 dans lequel l'α-monoléfine aromatique est le styrène.

5. Polymère bloc selon l'une quelconque des revendications 1 à 4 dans lequel le premier bloc est une chaîne atactique.

6. Polymère bloc selon l'une quelconque des revendications 1 à 5 dans lequel le premier bloc contient plus de 100 unités monomères.

7. Polymère bloc selon l'une quelconque des revendications 1 à 6 dans lequel, le deuxième bloc est une chaîne copolymère de 1,3-butadiène et d'éthylène.

8. Polymère bloc selon l'une quelconque des revendications 1 à 7 dans lequel le premier bloc est lié de façon covalente au deuxième bloc par un rattachement direct d'un atome de carbone d'une unité monomère du premier bloc à un atome de carbone d'une unité monomère du deuxième bloc.

## Patentansprüche

1. Blockpolymer mit einem ersten Block und einem zweiten Block, wobei das Blockpolymer Ethyleneinheiten, UD-Einheiten der cyclischen Struktur der Formel (I) und Einheiten mit 1-4-Butadien-Struktur oder 1-2-Butadien-Struktur umfasst,
mit der Maßgabe, dass dann, wenn es sich bei dem ersten Blockpolymer um eine Homopolymerkette eines 1,3-Diens handelt, das Blockpolymer mindestens eine Tg von weniger als -50 °C, vorzugsweise zwischen -100 °C und -50 °C, aufweist,
wobei
der erste Block mehr als 0 bis 100 Mol-% Monomereinheiten eines ersten 1,3-Diens und 0 bis weniger als 100 Mol-% Monomereinheiten eines aromatischen α-Monoolefins der Formel CH₂=CH-Ar umfasst, wobei Ar für eine substituierte oder unsubstituierte aromatische Gruppe, vorzugsweise Phenyl oder Aryl, steht,
wobei es sich bei dem ersten Block um eine Homopolymerkette des ersten 1,3-Diens oder eine Copolymerkette des ersten 1,3-Diens und des aromatischen α-Monoolefins handelt,
wobei die Ethyleneinheiten, die Einheiten mit 1-4-Butadien- oder 1,2-Butadien-Struktur und die UD-Einheiten im zweiten Block enthalten sind.

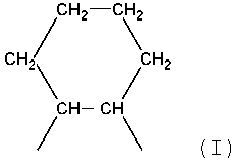

2. Blockpolymer nach Anspruch 1, wobei es sich bei dem Blockpolymer um einen Diblock handelt.

3. Blockpolymer nach einem der Ansprüche 1 bis 2, wobei es sich bei dem ersten 1,3-Dien um 1,3-Butadien, Isopren oder eine Mischung davon handelt.

4. Blockpolymer nach einem der Ansprüche 1 bis 3, wobei es sich bei dem aromatischen α-Monoolefin um Styrol handelt.

5. Blockpolymer nach einem der Ansprüche 1 bis 4, wobei es sich bei dem ersten Block um eine ataktische Kette handelt.

6. Blockpolymer nach einem der Ansprüche 1 bis 5, wobei der erste Block mehr als 100 Monomereinheiten enthält.

7. Blockpolymer nach einem der Ansprüche 1 bis 6, wobei es sich bei dem zweiten Block um eine Copolymerkette von 1,3-Butadien und Ethylen handelt.

8. Blockpolymer nach einem der Ansprüche 1 bis 7, wobei der erste Block über eine direkte Verknüpfung eines Kohlenstoffatoms einer Monomereinheit des ersten Blocks mit einem Kohlenstoffatom einer Monomereinheit des zweiten Blocks kovalent mit dem zweiten Block verknüpft ist.

## Claims

1. Block polymer comprising a first block and a second block, which block polymer comprises ethylene units, UD units of cyclic structure of the formula (I) and units of 1-4-butadiene structure or 1-2-butadiene structure,
with the proviso that, if the first block polymer is a homopolymer chain of a 1,3-diene, the block polymer has at least one Tg of less than -50°C, preferably between - 100°C and -50°C,
wherein
the first block comprises more than 0 to 100 mol% of monomer units of a first 1,3-diene and from 0 to less than 100 mol% of monomer units of an aromatic α-monolefin of the formula CH₂=CH-Ar, Ar representing a substituted or unsubstituted aromatic group, preferably phenyl or aryl,
the first block is a homopolymer chain of the first 1,3-diene or a copolymer chain of the first 1,3-diene and the aromatic α-monolefin,
the ethylene units, the units of 1-4-butadiene structure or 1-2-butadiene structure and the UD units are contained in the second block.

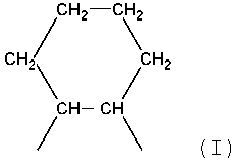

2. Block polymer according to Claim 1, which block polymer is a diblock.

3. Block polymer according to either one of Claims 1 or 2, wherein the first 1,3-diene is 1,3-butadiene, isoprene or a mixture thereof.

4. Block polymer according to any one of Claims 1 to 3, wherein the aromatic α-monoolefin is styrene.

5. Block polymer according to any one of Claims 1 to 4, wherein the first block is an atactic chain.

6. Block polymer according to any one of Claims 1 to 5, wherein the first block contains more than 100 monomeric units.

7. Block polymer according to any one of Claims 1 to 6, wherein the second block is an copolymer chain of 1,3-butadiene and ethylene.

8. Block polymer according to any one of Claims 1 to 7, wherein the first block is covalently bonded to the second block by a direct attachment of a carbon atom of a monomer unit of the first block to a carbon atom of a monomer unit of the second block.
